# EUROPEAN PATENT SPECIFICATION

(11) **EP 2 206 624 B1**
(45) Date of publication and mention of the grant of the patent: **16.03.2011**
(21) Application number: 10150039.5
(22) Date of filing: 04.01.2010
(51) Int. Cl.: B60N 2/06, B60N 2/07, B60R 22/26

(54) **Seat apparatus for vehicle**
Sitzvorrichtung für ein Fahrzeug
Appareil de siège pour véhicule

(30) Priority: 13.01.2009 JP 2009004912
(43) Date of publication of application: 14.07.2010
(73) Proprietor: AISIN SEIKI KABUSHIKI KAISHA, Kariya-shi, Aichi 448-8650 (JP)
(72) Inventor: Yamada, Yukifumi, Kariya-shi Aichi 448-8650 (JP); Goto, Naoki, Kariya-shi Aichi 448-8605 (JP); Isobe, Shinya, Kariya-shi Aichi 448-8605 (JP)
(74) Representative: TBK-Patent

(56) References cited:
- DE-A1- 3 209 351
- DE-A1- 10 311 869
- JP-A- 2002 337 576

## Description

### TECHNICAL FIELD

This disclosure relates to a seat apparatus for a vehicle. More particularly, this disclosure pertains to a seat apparatus for a vehicle having a slide mechanism for sliding a seat in a forward-rearward direction of the vehicle.

### BACKGROUND DISCUSSION

A known three-point seatbelt provided at a front seat such as a driver's seat in order to ensure a safety of an occupant is generally fixed to a vehicle body in order to ensure a mechanical strength. However, it has been required to enhance the safety of occupants of rear seats and an application of three-point seatbelts to the rear seats has been required. Those rear seats, for example, include a seat for two occupants and a seat for a single occupant which are arranged side by side, which is different from the structures of the front seat. Further, in a case where the three-point seat belt is applied, it is necessary that a seat belt (shoulder strap) can be extended from the vicinity of a shoulder of an occupant who is seated on the rear seat, and therefore, it is necessary to mount a seat belt anchor to a seat per se (seat frame) rather than a vehicle body in view of available space and visibility from driver's seat. With the foregoing known construction, in a case of a vehicle collision, the seat belt is Pulled by a significant tensional force in a forward direction by an inertia applied to the occupant to apply a significant load to the seat belt anchor, thereby generating a moment to the seat frame. Namely, a separating load, or peeling load which is applied to the seat frame upwardly to separate a rearward portion of the seat frame from a floor side and compressive load which is to compressively deform a front portion of the seat frame to the floor side are generated. Accordingly, ensuring the mechanical strength of the seat in order to ensure the safety of the occupant for countering the separating load and the compressive load applied to the seat frame is extremely important in terms of ensuring safety performance.

A known seat apparatus disclosed in DE10311869A1 (Reference 1) includes three-point seat belts each provided at each of seating positions, a seat belt anchor arranged at a center portion in a width direction, and a shoulder belt guide (through-anchor) for releasing the shoulder belt Further, according to the disclosure of Reference 1, slide mechanisms for adjusting forward-rearward positions are arranged at both sides in the width direction, respectively, and a seatback reclining angle adjusting mechanism (recliner) and an auxiliary slide mechanism for reinforcement which enables to move the seat in the forward-rearward direction of the vehicle are provided at an approximately center portion of the seat for two occupants in the width direction at which the seat belt anchor, or the like, is arranged. The auxiliary slide mechanism is configured to receive a load of the shoulder belt anchor at the approximately center portion in the width direction and a load of a lap belt anchor (separating load; bending moment), for example, when the vehicle is involved in a collision. Accordingly, the generation of the separating load, or the like, which separates the seat frame from the vehicle floor is restrained.

According to a known slide seat for a vehicle disclosed in JP2002-337576A (Reference 2), an auxiliary slide mechanism likewise a construction disclosed in Reference 1, which includes an auxiliary leg, an auxiliary lower rail, and an auxiliary upper rail, is provided between main rails serving as a pair on right and left sides.

According to a known seat for a vehicle disclosed in JP2002-347497A (Reference 3), a sub-rail and a sub-slider serving as an auxiliary slide mechanism is provided at an end portion of a seat frame to which a main rail is not provided. In those circumstances, the sub-rail and the sub-slider are arranged in parallel to the main rail having a predetermined interval from the main rail. Furthermore, DE-A-3209351 discloses a seat according to the preamble of claim 1.

Notwithstanding, according to the known seats disclosed in Reference 1, Reference 2, and Reference 3, three slide mechanisms extend in forward-rearward directions of the vehicle and are arranged having predetermined intervals from one another in a vehicle width direction. With those constructions, the mass of the seat is increased and structures of the seat become complicated. Further, because those three slide mechanisms are arranged at a space where occupants of rear seats rest their feet, seating postures of the occupants may be limited, for example, due to insufficient space.

A need thus exists for a seat apparatus for a vehicle which ensures a mechanical strength to a load causing, for example, a separation of a seat frame from a vehicle floor when a vehicle is involved in a collision, and which ensures a space for resting occupants' feet and reducing weight with a simple structure.

### SUMMARY

In light of the foregoing, the present invention provides a seat apparatus for vehicle according to claim 1.

According to the present invention, in a normal operation, the seat is smoothly moved without interfering with a sliding movement of the slide mechanism because the wire member retaining means relatively moves along the wire member. In a case where the separating load is applied to the seat belt because of the vehicle collision, or the like, the wire member retaining means connected to the belt anchor retaining the wire member to be immovable relative to the wire member. Thus, the separating load applied from the seat belt to the seat frame is released to the vehicle floor via the wire member.

According to another embodiment of the present invention, the wire member retaining means includes plural receiving members fixed to the seat frame and positioned along an upper surface of the wire member keeping a predetermined distance from one another, and a movable pressing member having a pressuring portion facing a bottom surface of the wire member between the adjacent receiving members, the movable pressing member configured to move upwardly when a separating load is transmitted thereto from the seat belt via the belt anchor.

According to a further embodiment of the present invention, the receiving members are arranged keeping a predetermined distance from each other along the upper surface of the wire member, and the movable pressing member includes the pressuring portion which faces the bottom surface of the wire member between the adjacent receiving members. Accordingly, when the separating load is transmitted via the seat belt anchor, in response to the upward movement of the movable pressing member, the pressuring portion moves upward between the adjacent receiving members to retain the wire member in a state where the wire member is bent between the receiving member and the pressuring portion. Accordingly, the movement of the seat frame relative to the wire member may be firmly restricted with simple constructions, and the separating load may be effectively released to the vehicle floor via the wire member

According to further embodiment of the present invention, the wire member retaining means includes plural receiving members fixed to the seat frame and positioned along a lower surface of the wire member keeping a predetermined distance from one another, and a movable pressing member having a pressuring portion facing an upper surface of the wire member between the adjacent receiving members, the movable pressing member configured to move downwardly when a separating load is transmitted thereto from the seat belt via the belt anchor.

According to a further embodiment of the present invention, the receiving members fixed to the seat frame are arranged keeping a predetermined distance from each other, and the movable pressing member includes the pressuring portion facing the upper surface of the wire member between the adjacent receiving members. Thus, upon the upward movement of the seat frame by receiving the separating load via the seat belt anchor, the receiving member fixed to the seat frame is directly supported by the wire member. In those circumstances, in response to the downward movement of the movable pressing member, the pressuring portion moves downward between the adjacent receiving members so that the wire member is retained between the receiving member and the pressuring portion in a state where the wire member is bent. Accordingly, when the separating load is applied, the upward movement of the receiving member fixed to the seat frame is restricted by the wire member, and simultaneously, the movable pressing member is moved downward relatively to retain the wire member between the receiving member and the movable pressing member. Thus, the separating load applied to the seat frame is firmly received and a part of the separating load is securely released to the vehicle floor.

According to still another embodiment of the present invention, the separating load transmission mechanism includes a crank mechanism connected to the belt anchor and converting a motion of the belt anchor based on the separating load to a rotational movement, and a motion converting mechanism converting the rotational movement of the crank mechanism to a linear movement in an upward-downward direction to transmit the linear movement to the movable pressing member.

According to the present invention, a motion of the seat belt anchor based on the separating load generated by the vehicle collision is effectively converted into a rotational movement by the crank mechanism, and the rotational movement is converted to an upward-downward movement by the motion converting mechanism. Accordingly, the wire member retaining means is securely operated when the separating load is generated, and the separating load is released to the vehicle floor via the wire member.

According to still further embodiment of the present invention, the motion converting mechanism corresponds to a cam mechanism, and the movable pressing member includes an upward-downward movement restricting member restricting a linear movement of the movable pressing member in an upward-downward direction in a normal operation, and allowing the linear movement of the movable pressing member in the upward-downward direction by being deformed or damaged when the separating load is applied.

According to the present invention, in a normal operation, the upward-downward movement of the movable pressing member is restricted by the upward-downward movement-restricting member, and the wire member is not retained by the wire member retaining means. Accordingly, the seat is smoothly operated by the slide mechanism. In a case where the separating load is applied, the upward-downward movement-restricting member, and the wire member is not retained by the wire member retaining means is deformed or damaged to enable the movable pressing member to move in the upward-downward directions. In response to the movement of the movable pressing member in the upward-downward directions, the pressuring portion moves in the upward-downward directions between the adjacent receiving members, thus to retain the wire member between the receiving member and the pressuring portion in a bent state. Accordingly, in a case where the separating load is applied to the seatbelts, the separating load is released to the vehicle floor by retaining the wire member by the wire member retaining means.

According to another embodiment of the present invention, the seat apparatus for the vehicle corresponds to a seat apparatus for two occupants and the wire member is positioned below the seat apparatus for two occupants at a side closer to a seat for a single occupant when the seat for the single occupant is provided at a side of the seat for two occupants.

According to the present invention, because the mechanical strength of the seat against the separating load is ensured by the wire member and the wire member retaining means without providing an auxiliary rail, which is, for example, the third rail for the double seat, a weight of the seat apparatus is reduced and the space required for the seat apparatus is reduced. Further, even when a seat is provided at a rear of the double seat, a space required for resting the occupants' feet is ensured and seating postures of the occupants of the seat provided at the rear of the double seat is prevented from being restrained.

According to still further embodiment of the present invention, at least one end of the wire member which is arranged with tension in parallel to the slide mechanism is supported by a wire intermediate portion support member to be bent, thereby being fixed to the vehicle floor.

According to a further embodiment of the present invention, because an intermediate portion of the wire member is bent by the wire intermediate portion support member, even when there is no available space for fixing the ends of the wire member linearly, selective ranges for fixing the end of the wire is extended by arranging the wire member with tension in parallel to the slide mechanism.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a perspective view of a vehicle seat to which a seat apparatus for a vehicle disclosed here is provided;

Fig. 2 is a perspective view of the seat apparatus for the vehicle applied to a seat for two occupants; and

Fig. 3 is a side view of a main portion of the seat apparatus for the vehicle according to a first embodiment disclosed here;

Fig. 4 is a perspective view of the main portion of the seat apparatus for the vehicle according to the first embodiment disclosed here;

Fig. 5 is a side view of the main portion of the seat apparatus for the vehicle according to the first embodiment disclosed here;

Fig. 6 is a cross-sectional view taken on line VI-VI of Fig. 5;

Fig. 7 is a cross-sectional view taken on line VII-VII of Fig. 5;

Fig. 8 is a side view of a main portion of a seat apparatus for a vehicle according to a second embodiment disclosed here;

Fig. 9 is a cross-sectional view taken on line IX-IX of Fig. 8;

Fig. 10 is a cross-sectional view taken on line X-X of Fig. 8;

Fig. 11 is a cross-sectional view taken on line XI-XI of Fig. 8;

Fig. 12 is a view showing an operational state of a vehicle seat according to the second embodiment disclosed here;

Fig. 13 is a view showing an operational state of the vehicle seat;

Fig. 14 is a view showing an operational state of the vehicle seat;

Fig. 15 is a view showing an operational state of the vehicle seat; and

Fig. 16 is a view showing another example for fixing a wire member.

### DETAILED DESCRIPTION

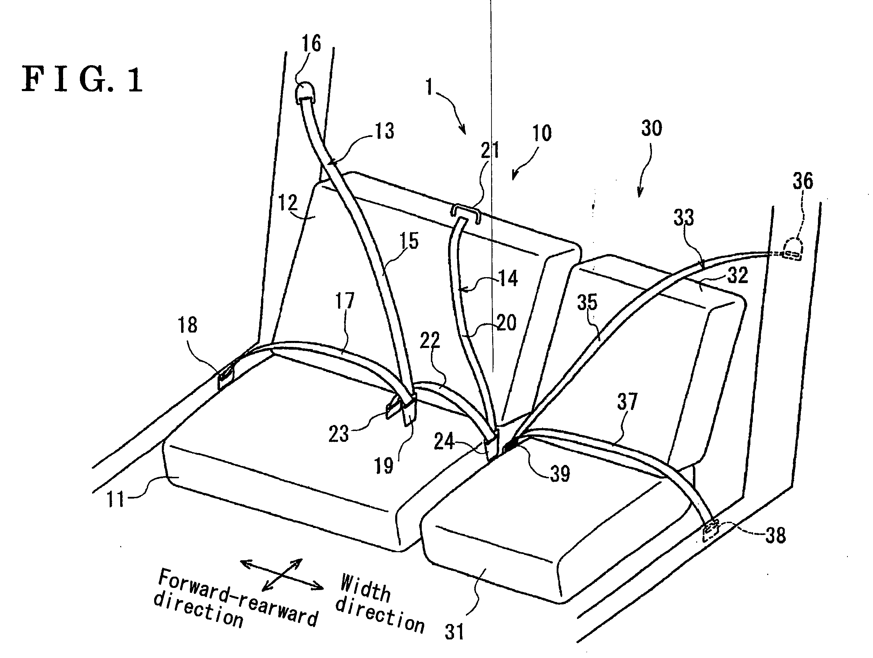

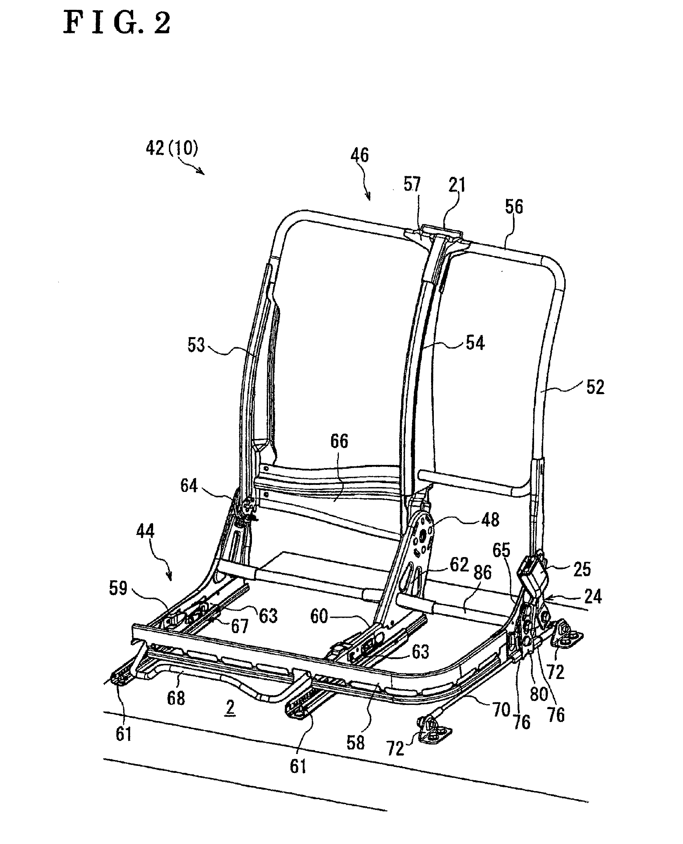

Embodiments of a seat apparatus for a vehicle will be explained with reference to drawing figures as follows. A seat apparatus 1 for a vehicle according to a first embodiment will be explained referring to Figs. 1-7 hereinafter. Fig. 1 shows the seat apparatus 1 for the vehicle arranged at a middle row of three-row seats mounted to a van type vehicle, for example. Fig. 1 is a perspective view showing a seat for two occupants (double seat) and a seat for a single occupant (single seat) arranged side by side. Fig. 2 is a perspective view showing a seat frame of the double seat. Hereinafter, directions, such as front, rear, forward, rearward, right, and left, upward, downward or the like, correspond to an orientation as viewed by an occupant when seated.

As shown in Fig. 1, a double seat 10 arranged at a right side of a vehicle floor 2 includes a seat cushion 11 which forms a seat surface and a seatback 12 supported at a rear end portion of the seat cushion 11 to be upright and to rotate about a horizontal rotational axis by means of recliners 48, 64 (see Fig. 2). A single seat 30 includes a seat cushion 31 and a seatback 32.

The double seat 10 includes three-point seatbelts 13, 14 and the single seat 30 includes a three-point seatbelt 33 so that occupants can fasten their seatbelt at each seating position. First, the three-point seatbelt 13 provided at a right portion of the double seat 10 includes a shoulder belt guide 16 guiding a released shoulder belt 15 positioned at an upper right of the vehicle body, a lap belt anchor 18 positioned at a bottom right of the vehicle body and fixed to a first end of a lap belt 17, and a belt buckle plate 19 positioned at an intermediate portion in a width direction of the seat cushion 11 and fixed to the shoulder belt 15 and a second end of the lap belt 17. The shoulder belt 15 and the second end of the lap belt 17 are fixed by fastening a tongue defining the shoulder belt 15 and the lap belt 17 to a buckle provided at the belt buckle plate 19. The shoulder belt 15 is guided by the shoulder belt guide 16 and is wound by a retractor such as an ELR (emergency locking retractor) which is built-in the vehicle body.

The three-point seat belt 14 for the double seat 10 positioned at a left side includes a shoulder belt guide 21 from which a shoulder belt 20 positioned at an upper intermediate position in a width direction of the seatback 12 is released, or drawn out, a belt buckle plate 23 positioned at an intermediate portion in a width direction of the seat cushion 11 and to which a first end of a lap belt 22 is fixed, and a belt buckle plate 24 serving as a belt anchor positioned at a left side of the seat cushion 11 and to which the shoulder belt 20 and a second end of the lap belt 22 are fixed. The first end of the lap belt 22 is fixed by fastening a tongue provided at the first end of the lap belt 22 to a buckle provided at the belt buckle plate 23. Further, the shoulder belt 20 and the second end of the lap belt 22 are fixed by fastening a tongue defining the length of the shoulder belt 20 and the lap belt 22 to a buckle 25 (see Fig. 2) provided at the belt buckle plate 24. The shoulder belt 20 is guided by the shoulder belt guide 21 to be wound around by a retractor such as an ELR which is built-in the seatback 12.

The three-point seat belt 33 provided at a seating position of an occupant for the single seat 30 includes a shoulder belt guide 36 positioned at an upper left of the vehicle body and guiding a released shoulder belt 35, a lap belt anchor 38 positioned at a bottom left of the vehicle body and to which a first end of a lap belt 37 is fixed, and a belt buckle plate 39 to which the shoulder belt 35 positioned at a right of a seat cushion 31 and a second end of the lap belt 37 are fixed. The shoulder belt 35 and the second end of the lap belt 37 are fixed by fastening a tongue belt defining the length of the shoulder belt 35 and the lap belt 37 to a buckle provided at the belt buckle plate 39. The shoulder belt 35 is guided by the shoulder guide belt 36 to be wound around by a retractor such as an ELR which is built-in the vehicle body.

As shown in Fig. 2, a seat frame 42 of the double seat 10 includes a seat cushion frame 44 supporting the seat cushion 11 (see Fig. 1), a seatback frame 46 supporting the seatback 12 (see Fig. 1), and the recliners 48, 64 rotatably connecting the seatback 12 relative to the seat cushion 11 and adjusting a rotational angle of the seatback 12.

Backside frames 52, 53 are positioned at ends of the seatback frame 46, and a back center frame 54 having a hollow rectangular pillar shape is positioned at an intermediate portion of the seatback frame 46. An upper pipe 56 connects top end portions of the backside frames 52 and 53. An intermediate portion of the upper pipe 56 and a top end portion of the back center frame 54 are connected by a joint portion 57. The joint portion 57 is configured to protect the shoulder belt 20. The shoulder belt guide 21 is provided at a top portion of the joint portion 57 to guide the released and retracted shoulder belt 20 (see Fig. 1). Further, the seat cushion frame 44 includes a cushion base frame 58 extending curving from a left side of the seat cushion frame 44 towards a front portion thereof by 90 degrees, a cushion side frame 59 linearly extending at the right side of the seat cushion frame 44, and a cushion center frame 60 provided at an intermediate portion thereof. A center bracket 62 which is made from a plate is secured to a top portion of the cushion center frame 60 by means of a bolt. The recliner 48 rotatably connecting the back center frame 54 and the center bracket 62 is provided at the center bracket 62. The recliner 48 is connected to the recliner 64 provided at a backside frame 53 provided at a right side by a connecting plate 66. The backside frame 52 at a left side and the cushion base frame 58 are rotatably connected by a hinge portion of a left side bracket 65. Further, the left side bracket 65, the center bracket 62, and the cushion side frame 59 are connected by a connection pipe 86. The seat cushion frame 44 includes the cushion base frame 58, the cushion side frame 59, the cushion center frame 60, the left side bracket 65, the center bracket 62, and the connection pipe 86.

Lower rails 61, 61 serving as a pair are fixed to the floor 2 side of the vehicle. The lower rails 61, 61 extend in forward-rearward directions of the vehicle facing the cushion side frame 59 and the cushion center frame 60, respectively. An upper rail 63 is fitted to be secured to a bottom end of each of the cushion side frame 59 and the cushion center frame 60 so as to be slidable relative to the lower rail 61 in the forward-rearward directions of the vehicle. The lower rail 61 and the upper rail 63 are configured to be locked at predetermined desired positions in the forward-rearward direction by a lock-unlock mechanism 67 (see Fig. 2). According to this embodiment, two pairs of the lower rails 61 and the upper rails 63 are arranged in parallel to each other keeping a predetermined distance from one another in a rail width direction (vehicle width direction). The lock-unlock mechanism 67 is configured to lock the lower rail 61 and the upper rail 63 by biasing an engaging projection provided at a lock member to be positioned through an insertion hole provided at the upper rail 63 and one of plural engaging holes formed on the lower rail 61 in a longitudinal direction thereof (forward-rearward direction of the vehicle) and to unlock the lower rail 61 and the upper rail 63 by disengaging the engaging projection from the insertion hole of the upper rail 63 and the engaging hole of the lower rail 61. The lock and unlock operation of the lower rail 61 and the upper rail 63 is performed by operating a handle 68 (see Fig. 2) provided at a bottom front portion of the vehicle seat 10. A forward-rearward slide mechanism serving as a slide mechanism includes the lock-unlock mechanism 67, the lower rail 61, and the upper rail 63.

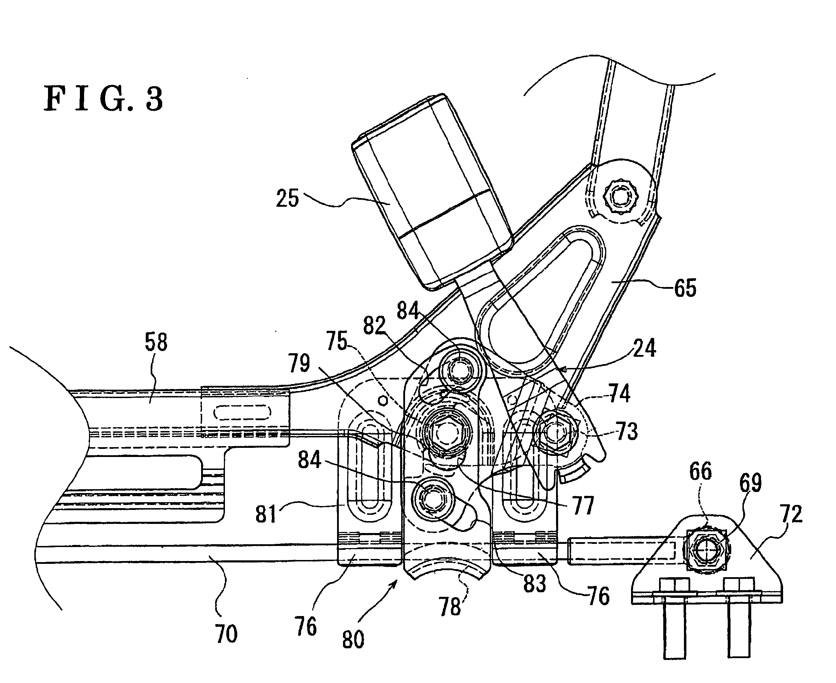

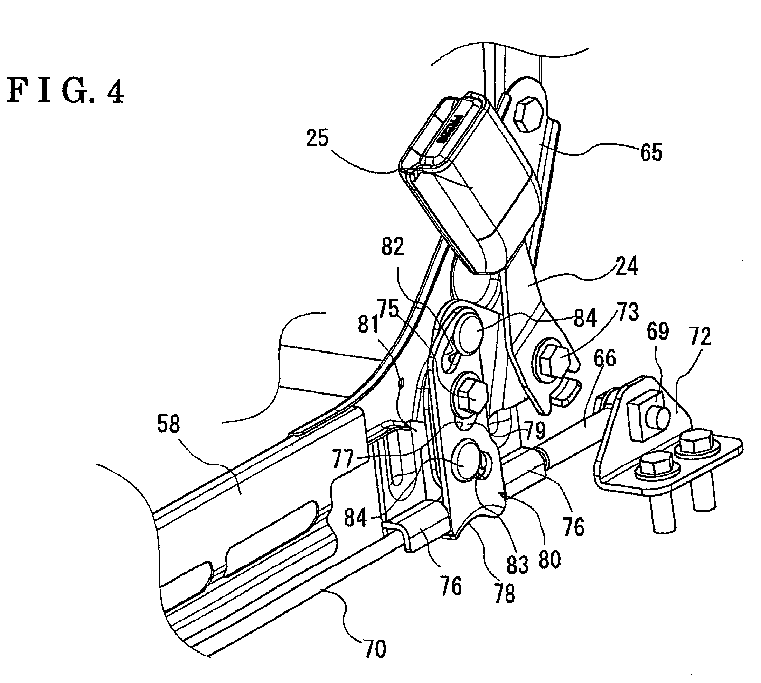

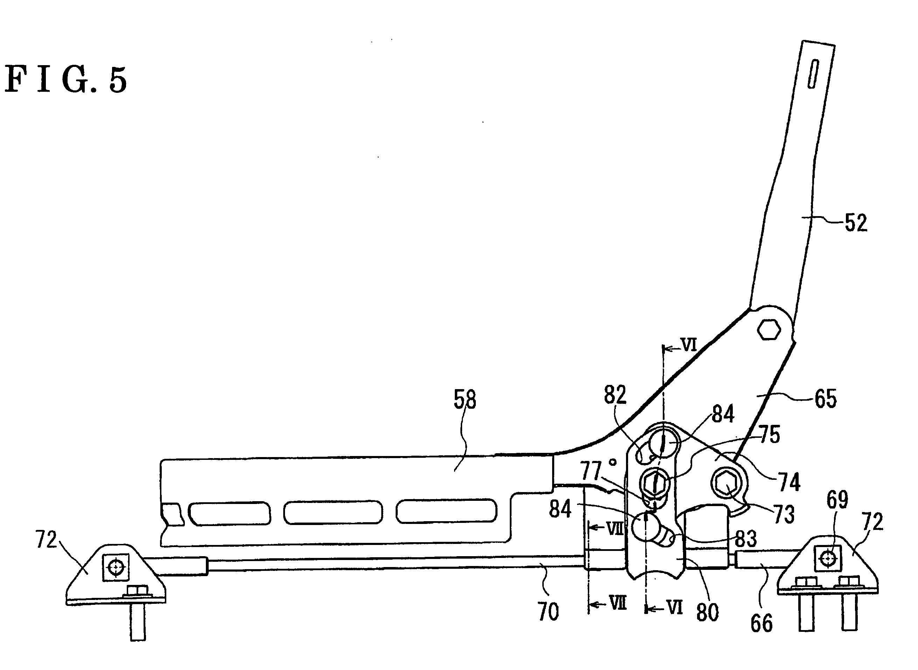

As shown in Fig. 5, a wire member 70, for example, made from a steel wire is arranged at a bottom left of the cushion base frame 58 (i.e., a bottom end portion at which the forward-rearward slide mechanism 61, 63 is not provided). End portions of the wire member 70 are fixed to wire supporting brackets 72, 72 which are fixed to the vehicle floor 2 by bolts, respectively, so that the wire member 70 is arranged with tension to be substantially in parallel to the vehicle floor 2 at a predetermined height position from the vehicle floor 2. As shown in Figs. 3 and 4, an annular metal fitting 66 is provided at each end portion of the wire member 70. The annular metal fitting 66 is formed in a cylindrical shape having an annular end portion and a base end portion formed with an insertion hole. An end portion of the wire member 70 is positioned in the insertion hole and fixed thereto by a rivet, or the like. The annular metal fitting 66 is fixed to the wire support bracket 72 by a bolt-nut member 69 at the annular end portion thereof.

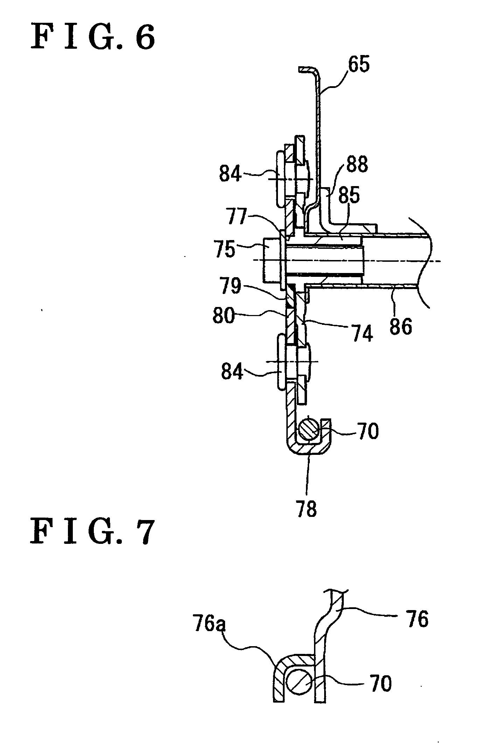

The belt buckle plate 24 including the buckle 25 provided at an end portion thereof is pivotally supported by a support shaft 73 at an end portion of a bell crank 74 which is supported to be rotatable relative to the left side bracket 65 at a base end portion thereof as shown in Figs. 3 and 4. Further, as shown in Fig. 6, a penetration hole is formed on a left side bracket 65, and a left end portion of the connection pipe 86 is welded to a periphery of the penetration hole of the left side bracket 65 via an attachment metal fitting 88. A flanged nut member 85 having a flange portion is fitted into an inner periphery of an end portion of the connection pipe 86 and welded thereto. The flanged nut member 85 is engaged with a flanged bolt member 75 via threads. The bell crank 74 is rotatably supported at an outer periphery of the flange portion of the flanged nut member 85. An engaging plate 80 serving as a movable pressing member is outfitted to the flanged bolt member 75 between the flange portion of the flanged nut member 85 and the flanged bolt member 75. The flanged nut member 85 and the flanged bolt member 75 serve as a rotational center axis and the bell crank 74 is supported to be rotatable about the rotational center axis which is fixed to the left side bracket 65 provided at the seat frame 42. A crank mechanism includes the bell crank 74, the flanged bolt member 75, and the flanged nut member 85.

An inverted-U-shaped support bracket 81 is welded to an outside of the left side bracket 65. An upper receiving member 76 serving as a receiving member is provided at each of bottom leg portions of the support bracket 81. According to this embodiment, two upper receiving members 76 are arranged keeping a predetermined distance from each other along the wire member 70. The upper receiving member 76 is formed, as shown in Fig. 7, to have a bifurcation by projecting a protruding piece 76a from a bottom leg portion of the support bracket 81 in an outward direction of the seat 10. The protruding piece 76a is bent so that a bottom surface of the protruding piece 76a faces a top surface of the wire member 70. The engaging plate 80 which is formed in a plate shaped which is elongated in an upward-downward direction is arranged on an outside of the support bracket 81 to be movable in the upward-downward direction relative to the support bracket 81, and is supported by the left side bracket 65. A pressuring portion 78 facing a bottom surface of the wire member 70 is formed at a bottom portion of the engaging plate 80. The pressuring portion 78 is formed in a curved configuration whose apex is positioned at a center portion thereof in a forward-rearward direction and is protruded towards an inward of the seat 10. A slot 77 having an elongated shape in an upward-downward direction is formed at an approximate center of the engaging plate 80 in the upward-downward direction. The flanged nut member 85 is fitted to the slot 77. An upward-downward movement-restricting member 79 made of resin and formed in a crescent shape is fitted into a bottom portion of the slot 77 so as to support a bottom surface of the flanged nut member 85.

The engaging plate 80 is guided by the adjacent upper receiving members 76, 76 provided at the support bracket 81 fixed to the seat frame 42, and by the flanged nut member 85 and the flanged bolt member 75 outfitted by the slot 77, thereby sliding in the upward-downward direction. An upper cam slot 82 which slants in a left-downward direction in Fig. 3 is formed on the engaging plate 80 at a level higher than the slot 77 and a lower cam slot 83 which slants in a right-downward direction in Fig. 3 is formed on the engaging plate 80 at a level lower than the slot 77. An engaging projection shaft 84 which is formed protruding from the bell crank 74 outwardly in a perpendicular direction relative to a rotation plane of the bell crank 74 is positioned in each of the cam slots 82, 83. Referring to Fig. 3, when the bell crank 74 rotates in a counterclockwise direction by an application of a large load, for example, when the vehicle is involved in a collision, each of the engaging projection shaft 84 engages with the cam slots 82, 83, so that the engaging plate 80 per se deforms or damages the upward-downward movement restricting member 79. Accordingly, the slot 77 is guided by the rotation center shaft (the flanged nut member 85 and the flanged bolt member 75) to move in an upward direction. A cam mechanism serving as a motion converting mechanism includes the rotation center shaft (the flanged nut member 85 and the flanged bolt member 75), the slot 77, the upper cam slot 82, the lower cam slot 83, and the engaging projection shaft 84.

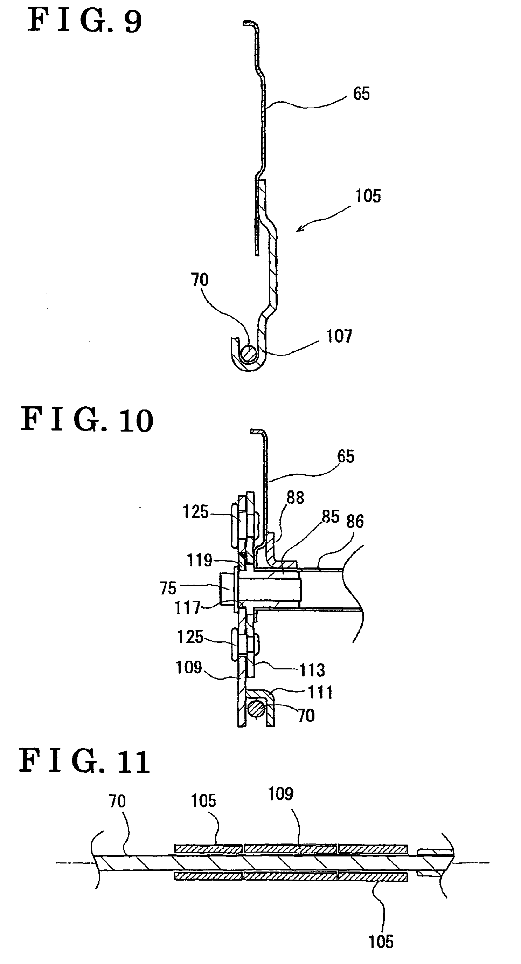

In a case where a large load is not applied to the belt buckle plate 24 from the seat belts 20, 22, even if a load, for example, approximately 50 kilograms is applied, because the upward-downward movement restricting member 79 restricts the upward movement of the engaging plate 80, the wire member 70 does not come to be retained between the upper receiving member 76 and the pressuring portion 78. In those circumstances, the engaging plate 80 and the support bracket 81 move freely relative to one another along the wire member 70 not to prevent the movement of the seat 10 in the forward-rearward direction. On the other hand, in a case of a vehicle collision, where the separating load of, for example, equal to or greater than 200 kilograms is applied to the seat belts 20, 22, as explained above, the upward-downward movement restricting member 79 is deformed or damaged and the engaging plate 80 moves in the upward direction in response to the rotation of the bell crank 74. Upon the upward movement of the engaging plate 80, the pressuring portion 78 pushes the wire member 70 upwardly, and simultaneous to that, the upward movement of the wire member 70 is restricted by the two upper receiving members 76, 76. According to the foregoing construction, the wire member 70 is fixedly retained by the upper receiving members 76,76 and the pressuring portion 78 (see Figs. 9-11).

Next, an operation of the seat apparatus applied to the double seat 10 will be explained referring to drawing figures hereinafter. First, in a case where the seat belt 14 is used in a normal state (normal operation), a large load is not applied from the seat belt 14 to the belt buckle plate (belt anchor) 24. For example, when a load of 50 to 60 kilograms is applied in a front-upward direction in the normal operation, the load applied from the seat belt 14 to the belt buckle plate 24 is transmitted to the bell crank 74 via the support shaft 73. In those circumstances, because the motion of the engaging plate 80 in the upward direction is restricted by the upward-downward movement restricting member 79 and the wire member 70 is not retained by the pressuring portion 78 and the upper receiving member 76 therebetween, the operation of the seat 10 in the forward-rearward direction by the forward-rearward slide mechanism is not hindered.

In a case of a vehicle collision, a large separating load is applied to the belt buckle plate 24 from the seat belt 14. For example, when a load of 200 kilograms is applied in an front-upward direction in a case of a vehicle collision, the bell crank 74 is rotated in a counterclockwise direction by the large load, the engaging projection shafts 84 are engaged with the cam slots 82, 83, respectively, so that the engaging plate 80 per se deforms or damages the upward-downward movement restricting member 79, thereby the slot 77 being guided by the rotation center shaft (the flanged nut member 85 and the flanged bolt member 75) to move upwardly. Accordingly, the pressuring portion 78 provided at a lower portion of the engaging plate 80 comes in contact with the bottom surface of the wire member 70 to push the wire member 70 upwardly. The wire member 70 comes to be positioned between the upper receiving members 76, 76 which are arranged by being spaced from each other by a predetermined distance and the upward movement of the wire member 70 is restricted by the upper receiving members 76, 76. Thus, the wire member 70 is retained between the pressuring portion 78 and the upper receiving member 76 in a state where the wire member 70 is deformed in a configuration having a projection in an upward direction. According to the foregoing construction, the sliding movement of the seat 10 in a forward direction and the movement of the seat 10 in an upward direction relative to the wire member 70 is firmly restricted, and a part of the separating load generated at the seat 10 is received by the wire member 70 to be released to the vehicle floor 2 to which the wire member 70 is fixed.

According to the seat apparatus 1 for the vehicle with the foregoing construction, because a wire member retaining means (i.e., including the upper receiving member 76, the engaging plate 80, and the pressuring portion 78) relatively moves along the wire member 70 in a normal state, the seat 10 is moved smoothly by the slide mechanism (the lower rail 61, the upper rail 63) without causing any difficulties. In a case where the separating load is applied to the seat belts 20, 22 when the vehicle is involved in a collision, the wire member retaining means (the upper receiving member 76, the engaging plate 80, the pressuring portion 78) connected to the belt anchor (belt buckle plate) 24 retains the wire member 70 to be unmovable relative to the wire member 70. According to the foregoing structure, a part of the separating load applied from the seat belts 20, 21 to the seat frame 42 is transmitted to the vehicle floor 2 via the wire member 70.

The upper receiving members 76, 76 are arranged being spaced from each other by a predetermined distance along the wire member 70. The engaging plate 80 includes the pressuring portion 78 positioned between the adjacent upper receiving members 76, 76 and facing the bottom surface of the wire member 70. Thus, when the separating load is transmitted via the belt buckle plate 24, in accordance with the upward movement of the engaging plate 80, the pressuring portion 78 is moved upwardly between the adjacent upper receiving members 76, 76 to retain the wire member 70 in a bent state between the upper receiving member 76 and the pressuring portion 78. Accordingly, the relative movement of the seat frame 42 relative to the wire member 70 is firmly restricted with a simple structure, and the separating load is effectively released to the vehicle floor 2 via the wire member 70.

Further, the motion of the belt buckle plate 24 by the separating load when the vehicle is involved in a collusion is effectively converted to a rotational motion by the crank mechanism, and the rotational motion is converted to an upward-downward motion by the motion converting mechanisms 74, 75. According to the foregoing construction, when the separating load is generated, the wire member retaining means (i.e., including the upper receiving member 76, the engaging plate 80, and the pressuring portion 78) is securely operated so that the separating load is received by the vehicle floor 2 via the wire member 70.

Further, in a normal operation, the upward-downward movement of the engaging plate 80 is restricted by the upward-downward movement restricting member 79 and the wire member 70 is not retained by the wire member retaining means including the upper receiving member 76, the engaging plate 80, and the pressuring portion 78. Accordingly, with the foregoing construction, the seat 10 is smoothly moved by the slide mechanism including the lower rail 61 and the upper rail 63. In a case where the separating load is applied, the upward-downward movement restricting member 79 is deformed or damaged to enable the engaging plate 80 to move in the upward-downward direction. In accordance with the movement of the engaging plate 80 in the upward-downward direction, the pressuring portion 78 moves in the upward-downward direction between the adjacent upper receiving members 76, 76 to retain the wire member 70 in the bent state between the upper receiving member 76 and the pressuring portion 78. Accordingly, when the separating load is applied, the separating load is released to the vehicle floor 2 by retaining the wire member 70 by the wire member retaining means 76, 78 with a simple structure using the upward-downward movement restricting member 79.

Further, according to the construction of the embodiment, because a mechanical strength of the seat 10 against the separating load is ensured without providing an auxiliary rail corresponding to the third rail for the double seat, a weight of the seat apparatus 1 per se is reduced and a space required for mounting the seat apparatus is reduced. In addition to that, even when another seat is provided at a rear of the double seat, a space for resting occupants' feet can be ensured and a seating posture of the occupant of the seat provided at the rear of the double seat is not restrained.

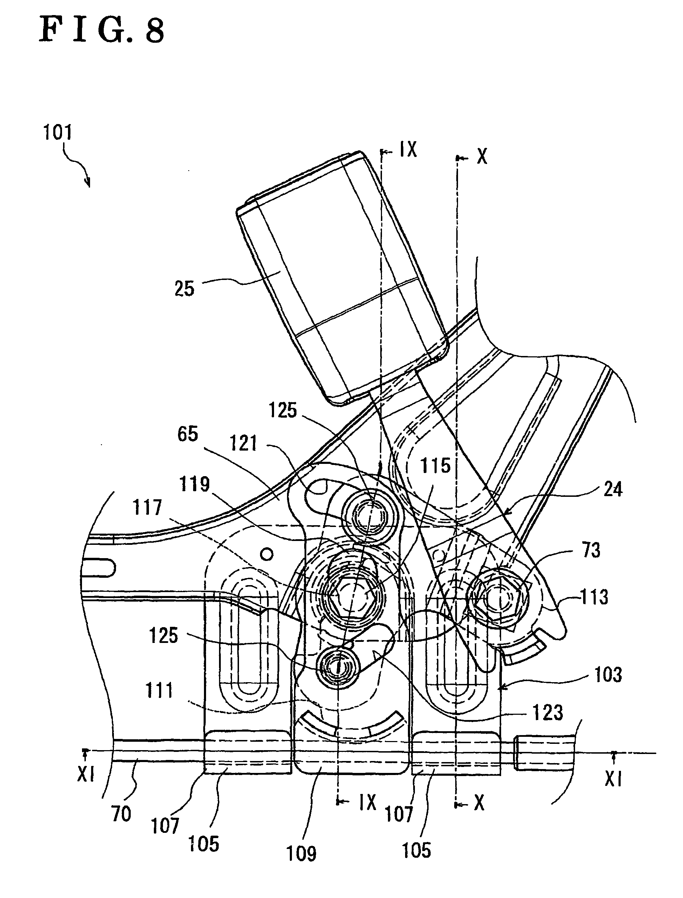

A second embodiment of the seat apparatus for the vehicle will be explained with reference to the drawing figures as follows. As shown in Fig. 8, a seat apparatus 101 for a vehicle according to the second embodiment differs from the seat apparatus for the vehicle according to the first embodiment with structures of a bell crank 113 and an engaging plate 109 (i.e., serving as a movable pressing member) and further, with structures that a support bracket 103 includes a lower receiving member (i.e., serving as a receiving member) 105 which receives a bottom surface of the wire member 70 instead of the upper receiving member. Other structures are common to those of the first embodiment, and the same reference numbers are provided and the explanations are not repeated.

The support bracket 103 shaped in an inverted-U shape is welded to an outer side of the left side bracket 65 to be secured thereat. The lower receiving members 105, 105 serving as a retaining member are provided at bottom portions of leg portions of the support bracket 103 serving as a pair, respectively. As shown in Fig. 9, the lower receiving member 105 includes a hook portion 107 having a hooked configuration in a cross-section. The hook portion 107 is formed to face a bottom surface of the wire member 70. The engaging plate 109 is provided on an outside of the support bracket 103 to be supported by the left side bracket 65 so as to be movable in an upward-downward direction. A pressuring portion 111 facing an upper surface of the wire member 70 is provided at a bottom portion of the engaging plate 109. The pressuring portion 111 is formed in a curved configuration whose center portion is positioned at a lowest position and is projected to an inward of the seat 10 (see Fig. 8 and Fig. 10). The lower receiving member 105, the engaging plate 109, and the pressuring portion 111 serve as the wire member retaining means. A slot 117 which is elongated in an upward-downward direction is formed at an approximately center portion of the engaging plate 109, and the flanged nut portion 85 is fitted to the slot 117. An upward-downward movement-restricting member 119 made of resin and formed in a crescent shape is fitted to an upper portion of the slot 117 to support the upper surface of the flanged nut portion 85 (see Fig. 10). An upper cam slot 121 which slants in a left-upward direction in Fig. 8 and a lower cam slot 123 which slants in a right-upward direction in Fig. 8 are formed on the engaging plate 109 at a higher and lower levels relative to the slot 117, respectively. An engaging projection shaft 125 which is provided protruding outwardly from the bell crank 113 in a perpendicular direction relative to a rotational plane of the bell crank 113 is fitted into each of the cam slots 121, 123. When the bell crank 113 is rotated in a counterclockwise direction in Fig. 8 by a large load because of a vehicle collision, the engaging projection shaft 125 and the cam slots 121, 123 are engaged, and thus the engaging plate 109 per se deforms or damages the upward-downward movement-restricting member 119, thereby the slot 117 being guided by the rotational center axis including the flanged bolt member 75 and the flanged nut member 85 to move in a downward direction.

Operations when the seat apparatus for the vehicle according to the second embodiment is applied to the double seat 10 will be explained with reference to drawing figures as follows. First, in a case where the seat belt 14 is used in a normal state, a large load is not transmitted from the seat belt 14 to the buckle 25. For example, in a case where a force of 50-60 kilograms is applied in an upward and forward direction, as in the first embodiment, the load applied to the belt buckle plate 24 based on the load applied to the seat belt is transmitted to the bell crank 113 via the support shaft 73. In those circumstances, because a downward movement of the engaging plate 109 is restricted by the upward-downward movement-restricting member 119 and the wire member 70 is not retained by the pressuring portion 111 and the lower receiving member 105 therebetween, a forward-backward movement of the seat 10 by the forward-rearward slide mechanisms 61, 63 is not hindered.

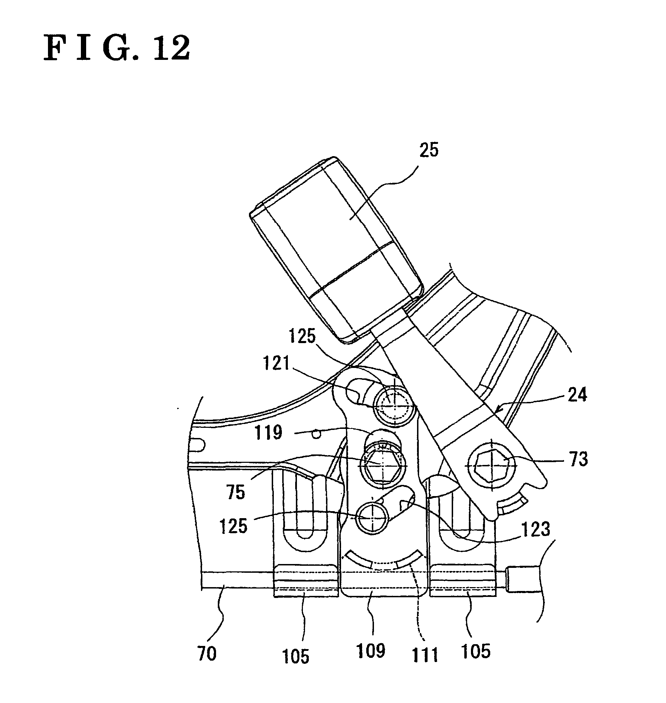

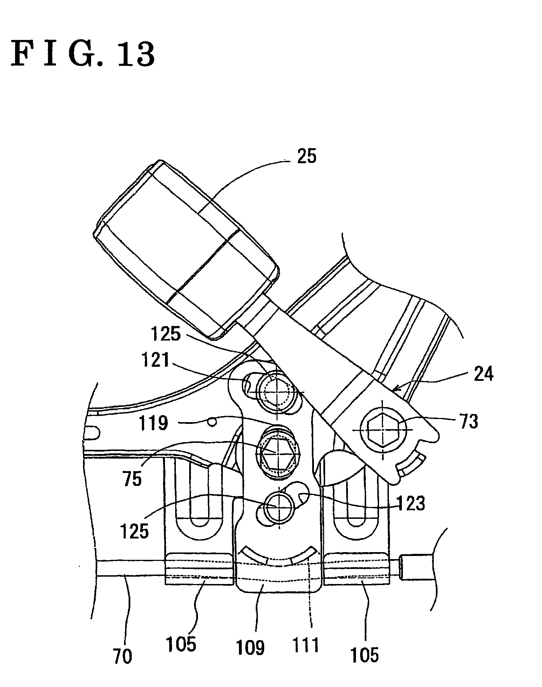

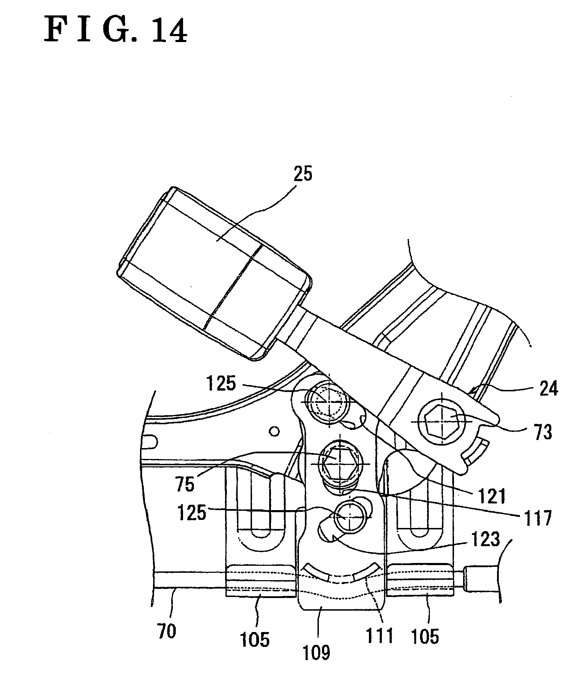

In a case of a vehicle collision, the seat belt buckle plate (seat belt anchor) 24 is moved based on the separating load applied to the seat belt 14. For example, in a case where a force of 200 kilograms is applied in an upward-forward direction in a case of a vehicle collision, upon the counterclockwise rotation of the bell crank 113 in Fig. 12 by the load applied to the seat belt buckle plate 24, the engaging plate 109 per se deforms or damages the upward-downward movement-restricting member 119 and thus the slot 117 is guided by the rotational center axis (flanged bolt member 75 and the flanged nut member 85) in a downward direction as shown in Figs. 13 and 14. Accordingly, the wire member 70 is pushed downwardly by the pressuring portion 111 provided at the bottom portion of the engaging plate 109, and simultaneously, the downward movement of the wire member 70 is restricted by the lower receiving member 105. Thus, the wire member 70 is firmly retained by the pressuring portion 111 and the lower receiving member 105 therebetween in a state where the wire member 70 is deformed so as to project in a downward direction. With the foregoing construction, a sliding movement and an upward movement of the seat 10 relative to the wire member 70 is restricted, and a part of the separating load generated at the seat 10 is transmitted to the wire member 70 to be released to the vehicle floor 2 fixed to the wire member 70. In those circumstances, although the lower receiving member 105 also moves in an upward direction by the separating load in an upward and forward direction applied to the seat 10, the engaging plate 109 moves downwardly. Accordingly, the wire member 70 is securely and firmly retained by the pressuring portion 111 and the lower receiving member 105 therebetween.

With the construction of the seat apparatus 101 for the vehicle according to the second embodiment, the lower receiving members 105, 105 fixed to the seat frame 42 are arranged keeping a predetermined distance from each other along the lower surface of the wire member 70, and the engaging plate 109 includes the pressuring portion 111 facing the upper surface of the wire member 70 and provided between the adjacent lower receiving members 105, 105. Thus, upon an upward movement of the seat frame 42 by the application of the separating load thereto via the seat belt buckle plate 24, the lower receiving member 105 fixed to the seat frame 42 is directly supported by the wire member 70. In those circumstances, in response to the downward movement of the engaging plate 109, the pressuring portion 111 moves in a downward direction at a position between the adjacent lower receiving members 105, 105 so that the wire member 70 is retained in a state where the wire member 70 is bent between the lower receiving member 105 and the pressuring portion 111. As explained above, because the wire member 70 is retained between the lower receiving member 106 and the engaging plate 109 by restricting the upward movement of the lower receiving member 105 fixed to the seat frame 42 by the wire member 70 and simultaneously by moving the engaging plate 109 relatively in a downward direction, the separating load applied to the seat frame 42 is received by the floor 2.

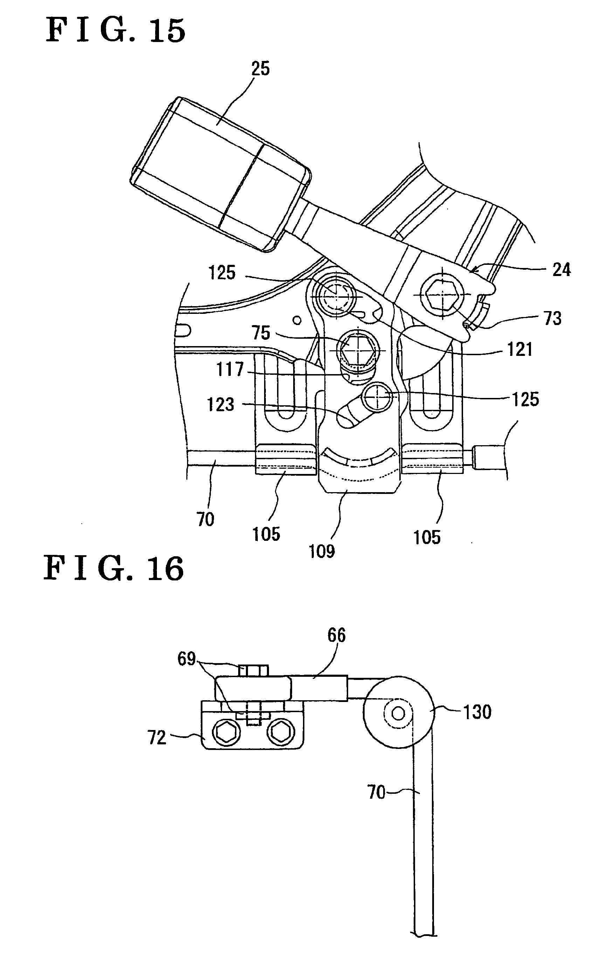

According to the foregoing embodiment, the wire member 70 is fixed to be linear and in parallel to the forward-rearward slide mechanism using the wire support brackets 72, 72. However, the construction is not limited to the foregoing structure. For example, as shown in Fig. 16, even if there is no available space for fixing wire support brackets 72, 72, at positions being in parallel to the slide mechanism, the wire member 70 may be mounted to the vehicle floor 2 by expanding selective ranges of fixation positions of the wire support bracket 72 by providing a pulley member 130 serving as a wire intermediate portion support member. More particularly, as shown in Fig. 16, an intermediate portion of the wire member 70 which is arranged linearly with tension is bent via the pulley member 130 and an end portion of the wire member 70 is fixed to the wire support bracket 72. Further, arrangements of the wire member are not limited to the construction arranged in parallel to the slide mechanism which extends in the forward-rearward direction of the vehicle. For example, the wire member may be arranged with tension in parallel to a slide mechanism which extends in a right-left direction of the vehicle.

Further, according to the foregoing embodiments, by positioning the upward-downward movement-restricting member 79 between the slot 77 and the flanged nut member 85 which guides the engaging plate 80 in the upward-downward direction, the upward and the downward movement of the engaging plate 80 is restricted in a normal state so that the wire member retaining means 76, 78 does not retain the wire member 70. However, the construction is not limited to the foregoing embodiments. For example, an upward-downward movement-restricting member may be arranged between the upper cam slot 82, the lower cam slot 83 and the respective engaging projection shafts 84, 84. In those circumstances, a protruding portion which comes in contact with a top end portion of the engaging plate 80 or a bottom end portion of the engaging plate 80 may be provided at the left side bracket 65.

Further, although the upward-downward movement-restricting member for retaining the wire member is applied in the foregoing embodiments, the seat apparatus for the vehicle may be constructed without applying the upward-downward movement-restricting member, With the foregoing construction, for example, in a case where a relatively small force is applied to the seat belt anchor, the force may be absorbed by an elastic force of the wire member which is arranged with tension. Further, although the upward-downward movement-restricting member is made of resin in the foregoing embodiments, a construction of the upward-downward movement-restricting member is not limited. For example, an elastic member such as a spring may be applied as the upward-downward movement-restricting member.

Still further, although the cam mechanism (the upper cam slot 82, the lower cam slot 83, engaging projection shaft 84) is applied as the motion converting mechanism, the construction of the motion converting mechanism is not limited. For example, a link mechanism which converts a rotational motion to a linear motion, for example, a slider-crank mechanism may be applied as the motion converting mechanism.

According to the seat apparatus for the vehicle of the embodiments, a mechanical strength against the load such as separating load when a vehicle is involved in a collision, and a space for resting occupants' feet are ensured. Further, a weight of the seat is reduced.

## Claims

1. A seat apparatus (1) for a vehicle, comprising:
a seat frame (42),
a slide mechanism (61, 63, 67) including a lower rail (61) adapted to be fixed to a vehicle floor (2) and an upper rail (63) movably supported relative to the lower rail (61) and fixed to a first end portion of the seat frame (42) in a vehicle width direction;
a belt anchor (24) connected to a seat belt (20, 21) and fixed to the seat frame (42);
a wire member (70) being extended, under tension, and having ends adapted to be fixed to the vehicle floor (2); and
a separating load transmission mechanism including a wire member retaining means (76, 78, 80; 105, 109, 111) connected to the belt anchor (24), the wire member retaining means (76, 78, 80; 105, 109, 111) being relatively movable along the wire member (70) in a normal operation and retaining the wire member (70) to lock the relative movement in a case where a separating load equal to or greater than a predetermined level is applied to the belt anchor (24), **characterised in that** the wire member is arranged below a second end portion of the seat frame (42) in the vehicle width direction which is out of association with said slide mechanism, and the wire member (70) is arranged in parallel to the slide mechanism (61, 63, 67).

2. The seat apparatus for a vehicle according to claim 1, wherein the wire member retaining means (76, 78, 80) comprises a plurality of receiving members (76) fixed to the seat frame (42) and positioned along an upper surface of the wire member (70) keeping a predetermined distance from one another, and a movable pressing member (80) having a pressuring portion (78) facing a bottom surface of the wire member (70) between the adjacent receiving members (76), the movable pressing member (80) configured to move upwardly when a separating load is transmitted thereto from the seat belt (20, 21) via the belt anchor (24).

3. The seat apparatus for a vehicle according to claim 1, wherein the wire member retaining means (105, 109, 111) comprises a plurality of receiving members (105) fixed to the seat frame (42) and positioned along a lower surface of the wire member (70) keeping a predetermined distance from one another, and a movable pressing member (109) having a pressuring portion (111) facing an upper surface of the wire member (70) between the adjacent receiving members (105), the movable pressing member (109) configured to move downwardly when a separating load is transmitted thereto from the seat belt (20, 21) via the belt anchor (24).

4. The seat apparatus for a vehicle according to either claim 2 or claim 3, wherein the separating load transmission mechanism comprises a crank mechanism (74, 75, 85; 113, 75, 85) connected to the belt anchor (24) and converting a motion of the belt anchor based on the separating load to a rotational movement, and a motion converting mechanism (82, 83, 84, 75, 85; 77; 121, 123, 125, 75, 85, 177) converting the rotational movement of the crank mechanism to a linear movement in an upward-downward direction to transmit the linear movement to the movable pressing member (80, 109).

5. The seat apparatus for a vehicle according to claim 4, wherein the motion converting mechanism corresponds to a cam mechanism (82, 83, 84; 121, 123, 125), and the movable pressing member (80, 109) includes an upward-downward movement restricting member (79, 119) restricting a linear movement of the movable pressing member (80, 109) in an upward-downward direction in a normal operation, and allowing the linear movement of the movable pressing member in the upward-downward direction by being deformed or damaged when the separating load is applied.

6. The seat apparatus for a vehicle according to any one of claims 1 to 4, wherein the seat apparatus (1) for a vehicle corresponds to a seat apparatus for two occupants and the wire member (70) is positioned below the seat apparatus for two occupants at a side closer to a seat (30) for a single occupant when the seat for the single occupant is provided at a side of a seat (10) for two occupants.

7. The seat apparatus for a vehicle according to any one of claims 1 to 6, wherein at least one end of the wire member (70) which is arranged with tension in parallel to the slide mechanism (61, 63, 67) is supported by a wire intermediate portion support member (130) to be bent, thereby being fixed to the vehicle floor (2).

## Patentansprüche

1. Sitzvorrichtung (1) für ein Fahrzeug, die Folgendes aufweist:
einen Sitzrahmen (42),
einen Gleitmechanismus (61, 63, 67), einschließlich einer unteren Schiene (61), die angepasst ist, um an einem Fahrzeugboden (2) befestigt zu werden, und einer oberen Schiene (63), die relativ zu der unteren Schiene (61) beweglich gestützt ist und an einem ersten Endabschnitt des Sitzrahmens (42) in einer Fahrzeugbreitenrichtung befestigt ist;
eine Gurtverankerung (24), die mit einem Sitzgurt (20, 21) verbunden ist und an dem Sitzrahmen (42) befestigt ist;
ein Drahtbauteil (70), das sich unter Zug erstreckt ist und Enden aufweist, die angepasst sind, um an dem Fahrzeugboden (2) befestigt zu werden; und
einen Trennlastübertragungsmechanismus einschließlich einer Drahtbauteilhalteeinrichtung (76, 78, 80; 105, 109, 111), die mit der Gurtverankerung (24) verbunden ist, wobei die Drahtbauteilhalteeinrichtung (76, 78, 80; 105, 109, 111) in einem normalen Betrieb relativ entlang dem Drahtbauteil (70) bewegbar ist und das Drahtbauteil (70) hält, um die relative Bewegung in einem Fall zu sperren, wenn eine Trennlast gleich wie oder größer als ein vorbestimmtes Niveau auf die Gurtverankerung aufgebracht ist, **dadurch gekennzeichnet, dass**
das Drahtbauteil unterhalb eines zweiten Endabschnitts des Sitzrahmens (42) in der Fahrzeugbreitenrichtung angeordnet ist, der ohne Verbindung zu dem Gleitmechanismus ist, und das Drahtbauteil (70) parallel zu dem Gleitmechanismus (61, 63, 67) angeordnet ist.

2. Sitzvorrichtung für ein Fahrzeug nach Anspruch 1, wobei die Drahtbauteilhalteeinrichtung (76, 87, 80) eine Vielzahl von Aufnahmebauteilen (76), die an dem Sitzrahmen (42) befestigt sind und entlang einer oberen Fläche des Drahtbauteils (70) positioniert sind und die einen vorbestimmten Abstand voneinander halten, und ein bewegliches Drückbauteil mit einem Drückabschnitt (78) aufweist, der einer Bodenfläche des Drahtbauteils (70) zwischen den benachbarten Aufnahmebauteilen (76) zugewandt ist, wobei das bewegliche Drückbauteil (80) gestaltet ist, um sich aufwärts zu bewegen, wenn eine Trennlast von dem Sitzgurt (20, 21) über die Gurtverankerung (24) auf dieses übertragen ist.

3. Sitzvorrichtung für ein Fahrzeug nach Anspruch 1, wobei die Drahtbauteilhalteeinrichtung (105, 109, 111) eine Vielzahl von Aufnahmebauteilen (105), die an dem Sitzrahmen (42) befestigt sind und entlang einer unteren Fläche des Drahtbauteils (70) positioniert sind, die einen vorbestimmten Abstand voneinander halten, und ein bewegliches Drückbauteil (109) mit einem Drückabschnitt (111) aufweist, der einer oberen Fläche des Drahtbauteils (70) zwischen den benachbarten Aufnahmebauteilen (105) zugewandt ist, wobei das bewegliche Drückbauteil (109) gestaltet ist, um sich nach unten zu bewegen, wenn eine Trennlast von dem Sitzgurt (20, 21) über die Gurtverankerung (24) auf dieses übertragen ist.

4. Sitzvorrichtung für ein Fahrzeug nach Anspruch 2 oder Anspruch 3, wobei der Trennlastübertragungsmechanismus einen Kurbelmechanismus (74, 75, 85; 113, 75, 85), der mit der Gurtverankerung (24) verbunden ist und eine Bewegung der Gurtverankerung basierend auf der Trennlast in eine Drehbewegung umwandelt, und einen Bewegungsumwandlungsmechanismus (82, 83, 84, 75, 85, 77; 121, 123, 125, 75, 85, 177) aufweist, der die Drehbewegung des Kurbelmechanismus in eine lineare Bewegung in einer Aufwärts-/Abwärtsrichtung umwandelt, um die lineare Bewegung auf das bewegliche Drückbauteil (80, 109) zu übertragen.

5. Sitzvorrichtung für ein Fahrzeug nach Anspruch 4, wobei der Bewegungsumwandlungsmechanismus einem Nockenmechanismus (82, 83, 84; 121, 123, 125) entspricht und das bewegliche Drückbauteil (80, 109) ein Aufwärts-/Abwärts-Bewegungsbeschränkungsbauteil (79, 119) aufweist, das eine lineare Bewegung des beweglichen Drückbauteils (80, 109) in einer Aufwärts-/Abwärtsrichtung in einem normalen Betrieb beschränkt und die lineare Bewegung des beweglichen Drückbauteils in der Aufwärts-/Abwärtsrichtung durch deformiert werden oder beschädigt werden ermöglicht, wenn die Trennlast aufgebracht ist.

6. Sitzvorrichtung für ein Fahrzeug nach einem der Ansprüche 1 bis 4, wobei die Sitzvorrichtung (1) für ein Fahrzeug einer Sitzvorrichtung für zwei Insassen entspricht und das Drahtbauteil (70) unterhalb der Sitzvorrichtung für zwei Insassen an einer Seite näher an einem Sitz (30) für einen einzelnen Insassen positioniert ist, wenn der Sitz für den Einzelinsassen an einer Seite eines Sitzes (10) für zwei Insassen vorgesehen ist.

7. Sitzvorrichtung für ein Fahrzeug nach einem der Ansprüche 1 bis 6, wobei wenigstens ein Ende des Drahtbauteils (70), das mit einer Zugspannung parallel zu dem Gleitmechanismus (61, 63, 67) angeordnet ist, durch ein Drahtzwischenabschnittstützbauteil (130) gestützt ist, um gebogen zu sein, wodurch es an dem Fahrzeugboden (2) befestigt ist.

## Revendications

1. Appareil de siège (1) pour un véhicule, comprenant :
un cadre de siège (42),
un mécanisme de glissière (61, 63, 67) comportant un rail inférieur (61) adapté pour être fixé à un plancher (2) d'un véhicule et un rail supérieur (63) soutenu en mobilité par rapport au rail inférieur (61) et fixé à une première partie d'extrémité du cadre de siège (42) dans une direction de largeur du véhicule ;
un ancrage de ceinture (24) relié à une ceinture de sécurité (20, 21) et fixé au cadre de siège (42) ;
un élément de fil (70) qui s'étend sous traction et ayant des extrémités adaptées pour être fixées au plancher (2) d'un véhicule ; et
un mécanisme de transmission de charge de séparation comportant des moyens (76, 78, 80 ; 105, 109, 111) de rétention de l'élément de fil connectés à l'ancrage de ceinture (24), les moyens (76, 78, 80 ; 105, 109, 111) de rétention de l'élément de fil étant relativement mobiles le long de l'élément de fil (70) lors d'une manoeuvre normale et retenant l'élément de fil (70) pour bloquer le mouvement relatif dans un cas où une charge de séparation supérieure ou égale à un niveau prédéterminé est appliquée à l'ancrage de ceinture (24), **caractérisé en ce que** l'élément de fil est disposé sous une deuxième partie d'extrémité du cadre de siège (42) dans la direction de largeur d'un véhicule qui n'est pas associée avec ledit mécanisme de glissière, et l'élément de fil (70) est disposé parallèlement au mécanisme de glissière (61, 63, 67).

2. Appareil de siège pour un véhicule selon la revendication 1, dans lequel les moyens (76, 78, 80) de rétention de l'élément de fil comprennent une pluralité d'éléments de réception (76) fixés au cadre de siège (42) et positionnés le long d'une surface supérieure de l'élément de fil (70) gardant une distance prédéterminée les uns par rapport aux autres, et un élément de pression mobile (80) ayant une partie de pressurisation (78) en vis-à-vis d'une surface de fond de l'élément de fil (70) entre les éléments de réception adjacents (76), l'élément de pression mobile (80) configuré pour se déplacer vers le haut lorsqu'une charge de séparation lui est transmise depuis la ceinture de sécurité (20, 21) par l'intermédiaire de l'ancrage de ceinture (24).

3. Appareil de siège pour un véhicule selon la revendication 1, dans lequel les moyens (105, 109, 111) de rétention de l'élément de fil comprennent une pluralité d'éléments de réception (105) fixés au cadre de siège (42) et positionnés le long d'une surface inférieure de l'élément de fil (70) gardant une distance prédéterminée les uns par rapport aux autres, et un élément de pression mobile (109) ayant une partie de pressurisation (111) en vis-à-vis d'une surface supérieure de l'élément de fil (70) entre les éléments de réception adjacents (105), l'élément de pression mobile (109) configuré pour se déplacer vers le bas lorsqu'une charge de séparation lui est transmise depuis la ceinture de sécurité (20, 21) par l'intermédiaire de l'ancrage de ceinture (24).

4. Appareil de siège pour un véhicule selon l'une des revendications 2 ou 3, dans lequel le mécanisme de transmission de charge de séparation comprend un mécanisme de manivelle (74, 75, 85 ; 113, 75, 85) relié à l'ancrage de ceinture (24) et convertissant un mouvement de l'ancrage de ceinture sur la base de la charge de séparation en un mouvement de rotation, et un mécanisme de conversion de mouvement (82, 83, 84, 75, 85 ; 77 ; 121, 123, 125, 75, 85, 177) convertissant le mouvement de rotation du mécanisme de manivelle en un mouvement linéaire dans une direction ascendante-descendante pour transmettre le mouvement linéaire à l'élément de pression mobile (80, 109).

5. Appareil de siège pour un véhicule selon la revendication 4, dans lequel le mécanisme de conversion de mouvement correspond à un mécanisme de came (82, 83, 84 ; 121, 123, 125), et l'élément de pression mobile (80, 109) comporte un élément de limitation de mouvement ascendant-descendant (79, 119) limitant un mouvement linéaire de l'élément de pression mobile (80, 109) dans une direction ascendante-descendante lors d'une manoeuvre normale, et permettant le mouvement linéaire de l'élément de pression mobile dans la direction ascendante-descendante en étant déformé ou endommagé lorsque la charge de séparation est appliquée.

6. Appareil de siège pour un véhicule selon l'une quelconque des revendications 1 à 4, dans lequel l'appareil de siège (1) pour un véhicule correspond à un appareil de siège pour deux occupants et l'élément de fil (70) est positionné sous l'appareil de siège pour deux occupants à un côté plus proche d'un siège (30) pour un seul occupant quand le siège pour le seul occupant est prévu à un côté d'un siège (10) pour deux occupants.

7. Appareil de siège pour un véhicule selon l'une quelconque des revendications 1 à 6, dans lequel au moins une extrémité de l'élément de fil (70) qui est disposé avec tensionné parallèlement au mécanisme de glissière (61, 63, 67) est soutenue par un élément de support (130) de partie intermédiaire de fil à plier, étant ainsi fixé au plancher du véhicule (2).
